Europäisches Patentamt

European Patent Office

Office européen des brevets

(19)

(11) Numéro de publication: **0 074 884**

**A1**

(12)

# DEMANDE DE BREVET EUROPEEN

(21) Numéro de dépôt: **82401620.8**

(22) Date de dépôt: **02.09.82**

(51) Int. Cl.³: **G 05 G 1/10**
**F 16 F 15/14, B 23 Q 5/54**

(30) Priorité: **16.09.81 FR 8117460**

(43) Date de publication de la demande:
**23.03.83 Bulletin 83/12**

(84) Etats contractants désignés:
**AT DE GB IT SE**

(71) Demandeur: **SOCIETE DE MECANIQUE DE CASTRES**
**Z.I. de Melou Rue de l'Industrie Boite Postale 237**
**F-81104 Castres Cédex(FR)**

(72) Inventeur: **Cabrol, Robert**
**Galiou-Navès**
**F-81100 Castres(FR)**

(74) Mandataire: **Réal, Jacques et al,**
**Régie Nationale des Usines Renault SCE 0804**
**F-92109 Boulogne Billancourt Cedex(FR)**

(54) Volant de manoeuvre manuel du type débrayable pour machine-outil.

(57) Volant de manoeuvre manuel d'un organe de déplacement automatique d'une machine-outil et du type comportant un corps 3 formant sa périphérie extérieure, lié à un
moyeu (5) monté débrayable sur un axe (7) transmettant le
mouvement dudit organe caractérisé en ce que le corps (3)
précité comporte des masselottes mobiles (17) ayant pour
fonctions d'annuler son entrainement en rotation dû au
frottement axe-moyeu.

FIG.1

Croydon Printing Company Ltd

Volant de manoeuvre manuel du type débrayable pour machine-outil.

La présente invention est relative à un volant de manoeuvre manuel du type débrayable pour machine-outil et plus particulièrement pour machine possèdant des organes de déplacements automatiques rapides.

Sur de telles machines, le volant est susceptible, à la fin de la course en avance automatique d'atteindre une vitesse de rotation élevée qui peut, sur certaines d'entre elles, correspondre approximativement à la rotation de l'axe transmettant le mouvement.

A l'arrêt de l'avance automatique, le volant continue à tourner du fait de son inertie et il est très dangereux de l'arrêter sans risques de se blesser.

Diverses tentatives ont été faites pour résoudre ce problème et se sont traduites par la réalisation de volants débrayables avec ou sans contrepoids ou par des volants exempts de parties saillantes ou munies de poignées escamotables.

Malheureusement, même débrayé, le volant est entrainé par le frottement de l'axe sur le moyeu et prend de l'accélération ; le volant muni de contrepoids devient plus dangereux du fait de sa plus grande inertie lors de l'arrêt.

Par ailleurs la suppression des poignées rend moins pratique la maniabilité du déplacement des tables de machines-outils.

Le but de la présente invention est donc de supprimer les inconvénients précités en proposant un volant tout à la fois maniable et sûr, ledit volant du type comportant un corps formant sa périphérie extérieure lié à un moyeu monté débrayable sur un axe transmettant le mouvement d'un organe de déplacement rapide d'une machine outil étant caractérisé en ce que le corps (3) précité comporte des masselottes mobiles (17) ayant pour fonction d'annuler son entrainement en rotation dû au frottement axe-moyeu.

Selon une première caractéristique de l'invention le corps précité présente une forme générale torique creuse dont le volume est rempli partiellement de masselottes.

Selon un premier mode d'exécution le corps est obtenu à partir d'un volant massif repris en usinage et sur lequel est fixé un carter de fermeture.

D'autres avantages et caractéristiques de la présente invention apparaitront plus clairement à la suite de la description qui va suivre de quelques modes d'exécution donnés uniquement à titre d'exemples et représentés aux dessins annexés dans lesquels :

La figure 1 représente un premier mode d'exécution d'un volant de machine-outil selon l'invention.

Les figures 2 et 3 représentent partiellement deux autres variantes d'exécution.

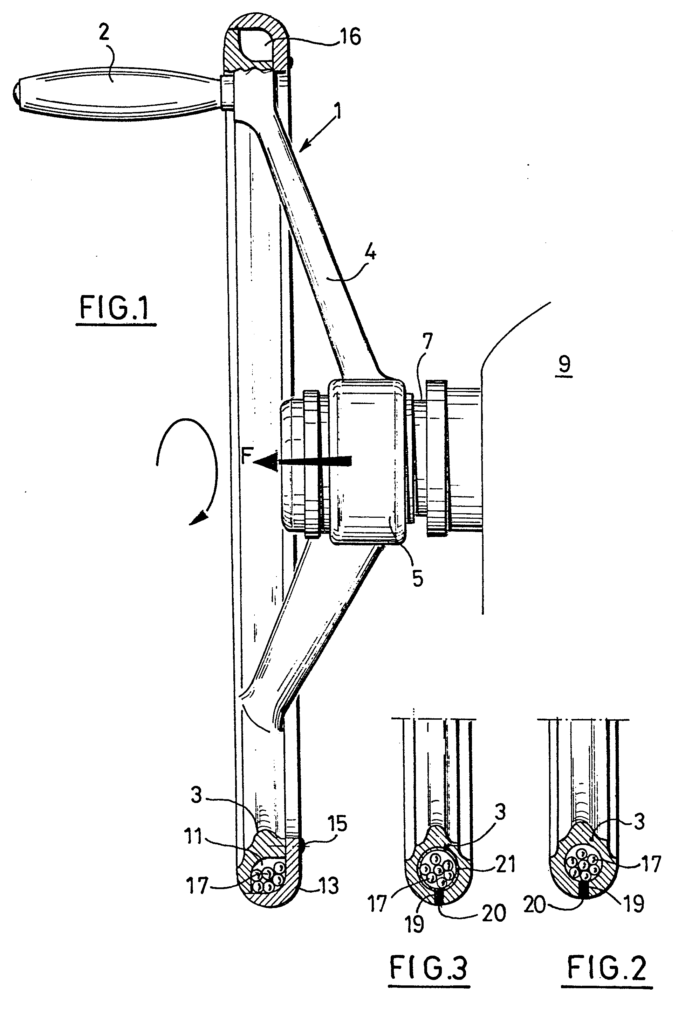

La figure 1 représente un volant manuel 1 selon l'invention muni d'une poignée de manoeuvre 2 et constitué par un corps 3 formant sa périphérie extérieure de forme générale torique reliée au moyen de rayons 4 à un moyeu 5 monté, comme connu en soi, débrayable sur un axe 7 sensiblement horizontal transmettant le mouvement d'un organe 9 de déplacement automatique rapide d'une machine outil telle une fraiseuse par exemple (non représentée).

Le corps massif 3 a été repris en usinage de manière à y creuser, de préférence du coté intérieur , une gorge circulaire 11 qui coopère avec un carter rapporté 13 fixé, au moyen de vis 15 par exemple, sur ledit corps pour réaliser un volume creux et fermé 16, de forme générale sensiblement torique rempli partiellement de masselottes ou de billes 17 susceptibles de se déplacer librement à l'intérieur dudit volume.

La figure 2 représente une variante d'exécution du corps 3 qui est

- 3 -

0074884

constitué par un tore qui vient directement de fonderie et dans lequel est prévu un trou 19 pour le passage des masselottes ou billes 17, trou qui est ensuite bouché au moyen d'une pâte durcissable 20 notamment.

La figure 3 représente une autre variante qui diffère de la précédente par l'emploi d'un chemin de roulement pour les billes 17 constitué par un tube 21 qui tapisse intérieurement le tore formant le corps 3, l'ensemble/étant obtenu par un procédé de moulage
muni d'un trou 19
dans lequel le tube est inséré, avant coulée, dans le moule destiné à réaliser ledit volant.

Comme il a été indiqué précédemment les masselottes ou billes sont destinées à se déplacer librement à l'intérieur du corps 3 et présentent, par conséquent, un diamètre inférieur à celui de la section du volume ou du tore précité ; par ailleurs les masselottes ou billes n'occupent qu'une partie du volume creux du corps 3.

A titre d'indications nullement limitatives, notons qu'il est avantageux que le volume occupé par les éléments 17 représente environ 10 % du volume creux défini plus haut et que le rapport entre le diamètre des billes et celui de la section du tore soit inférieur à 6/15.

Il ressort clairement de la description qui précède que le volant anti-inertie selon l'invention, une fois débrayé selon la flèche F, a tendance à être entrainé par les forces de frottement axe-moyeu ; toutefois les billes ou masselottes 17 libres dans le corps 3 provoquent un balourd situé toujours dans la partie inférieure du volant, et empêchent la rotation de celui-ci en lui imprimant un mouvement d'oscillation.

Bien entendu l'invention n'est nullement limitée aux modes d'exécution décrits et représentés mais couvrent également leurs équivalents techniques.

0074884

REVENDICATIONS.

1. Volant de manoeuvre manuel d'un organe de déplacement automatique d'une machine outil et du type comportant un corps (3) formant sa périphérie extérieure, lié à un moyeu (5) monté débrayable sur un axe (7) transmettant le mouvement dudit organe caractérisé en ce que le corps (3) précité comporte des masselottes mobiles (17) ayant pour fonctions d'annuler son entrainement en rotation dû aufrottement axe-moyeu.

2. Volant selon la revendication 1 en ce que le corps précité présente une forme générale torique creuse dont le volume est rempli partiellement de masselottes.

3. Volant selon la revendication 2 caractérisé en ce que le diamètre des masselottes est sensiblement inférieur au diamètre de la section de la périphérie torique.

4. Volant selon l'une des revendications 1 à 3 caractérisé en ce que le corps est obtenu à partir d'un volant massif repris en usinage et sur lequel est fixé un carter de fermeture.

5. Volant selon l'une des revendications 1 à 3 caractérisé en ce que le volant vient directement de fonderie.

6. Volant selon la revendication 5 caractérisé en ce que le corps précité comporte intérieurement un chemin de roulement constitué par un tube rapporté.

7. Volant selon l'une des revendications 5 ou 6 caractérisé en ce que le corps comporte un trou de passage des masselottes ou des billes.

8. Volant selon l'une des revendications 1 à 7 caractérisé en ce que les masselottes sont constituées par des billes.

1/1

0074884

FIG.1

FIG.3      FIG.2

Office européen
des brevets

**0074884**

Numéro de la demande

## RAPPORT DE RECHERCHE EUROPEENNE

EP 82 40 1620

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | --- <br> US-A-3 990 535 (BRUCE) | 1-8 | G 05 G 1/10 <br> F 16 F 15/14 <br> B 23 Q 5/54 |
| A | --- <br> DE-A-2 427 332 (HERMANUS) | | |
| A | --- <br> GB-A-1 303 813 (ASSOCIATED ENG. LTD.) | | |
| A | --- <br> DE-C- 977 086 (SCHÄFER) | | |
| A | --- <br> US-A-3 548 508 (JACOBSEN) | | |
| | ----- | | |

**DOMAINES TECHNIQUES RECHERCHES (Int. Cl. ³)**

B 23 Q 5/00
G 05 G 1/00
F 16 F 9/00
F 16 F 15/00
B 62 D 1/00
B 23 B 29/00
F 16 C 3/00

Le présent rapport de recherche a été établi pour toutes les revendications

| Lieu de la recherche <br> LA HAYE | Date d'achèvement de la recherche <br> 09-12-1982 | Examinateur <br> DE GUSSEM J.L. |
|---|---|---|